# EUROPÄISCHE PATENTSCHRIFT

(11) **EP 3 685 496 B1**
(45) Veröffentlichungstag und Bekanntmachung des Hinweises auf die Patenterteilung: **15.12.2021**
(21) Anmeldenummer: 18769695.0
(22) Anmeldetag: 14.09.2018
(51) Int. Cl.: H02K 11/215, H02K 7/06, B60T 13/74, F16D 65/28, H02K 7/00, H02K 7/08, H02K 7/14, F16D 121/04, F16D 121/24, F16D 125/40

(54) **ELEKTRISCHER HOHLWELLENMOTOR**
ELECTRIC HOLLOW SHAFT MOTOR
MOTEUR ÉLECTRIQUE À ARBRE CREUX

(30) Priorität: 20.09.2017 DE 102017216664
(43) Veröffentlichungstag der Anmeldung: 29.07.2020
(73) Patentinhaber: Continental Teves AG & Co. OHG, 60488 Frankfurt am Main (DE)
(72) Erfinder: STAUDER, Peter, 55128 Mainz (DE); DINH, Nam Anh, 60488 Frankfurt (DE); KAUFMANN, Tom, 55566 Ippenschied (DE); KNOPIK, Thomas, 55129 Mainz (DE); HABIG, Jens, 61476 Kronberg (DE)
(74) Vertreter: Continental Corporation
(86) Internationale Anmeldenummer: PCT/EP2018/074864
(87) Internationale Veröffentlichungsnummer: WO 2019/057623

(56) Entgegenhaltungen:
- WO-A1-2009/146737
- CN-A- 103 326 515
- DE-T5-112007 003 557
- DE-T5-112007 003 557
- JP-A- 2015 065 768

## Beschreibung

Die Erfindung betrifft einen elektromotorisch betriebenen Hydraulikkolben mit einem Hohlwellenmotor gemäß dem unabhängigen Anspruch 1.

Zudem betrifft die Erfindung ein Bremssystem für ein Fahrzeug, mit einem elektromotorisch betriebenen Hydraulikkolben.

In einer Vielzahl von Anwendungsbereichen ergibt sich bei der Verwendung von Hohlwellenmotoren das konstruktionsbedingte Problem, dass an den Wellenenden kein Magnet zur Erfassung der Drehlage der Hohlwelle angeordnet und befestigt werden kann.

Im Stand der Technik sind beispielsweise elektromotorisch betriebene Hydraulikkolben bekannt, bei welchen mittels eines Hohlwellenmotors eine Spindel entlang ihrer Längsachse verschoben werden kann. Aufgrund einer innerhalb des Motorengehäuses angeordneten Verdrehsicherung ist es nicht möglich, am Wellenende des Hohlwellenmotors einen Magneten zur Erfassung der Drehlage anzuordnen.

So ist aus dem Dokument DE 11 2007 003 557 T5 eine Vorrichtung zur Erkennung der Rotationsposition eines Motors bekannt, welche eine rotierende Einheit und eine Erkennungseinheit zum Erkennen einer Rotationsposition der rotierenden Einheit umfasst, wobei sich eine Halterung in einen inneren Bereich des hohlen Rotorbereichs erstreckt und die rotierende Einheit im Inneren des hohlen Rotorbereichs an dem Motorrotor befestigt ist. Die rotierende Einheit hat einen Magneten mit einer ringförmigen äußeren Umfangfläche und der Magnet ist im inneren des hohlen Rotorbereichs befestigt. Die Erkennungseinheit hat mehrere magnetische Erkennungselemente, die in festen Abständen um eine ringförmige äußere Umfangsfläche des Magneten angeordnet sind. Die Halterung hat einen zylindrischen Bereich, der den Magneten im Inneren des hohlen Rotorbereichs koaxial umgibt und die magnetischen Erkennungselemente sind in vorgegebenen Winkelintervallen auf einer inneren Umfangsfläche des zylindrischen Bereichs entlang einer Umfangsrichtung davon befestigt. Ein elektromotorisch betriebener Hydraulikkolben ist aus dem Dokument JP 2015 065768 A bekannt.

Bekannte Lösungen zur Drehlagenerfassung bei elektrischen Hohlwellenmotoren haben außerdem regelmäßig den Nachteil, dass die Kalibrierung des Winkeloffsets erst nach Abschluss der Endmontage des Hohlwellenmotors möglich ist, wodurch sich eine zeit- und kostenaufwendige Alignment-Prozedur vor der Inbetriebnahme entsprechender Geräte ergibt.

Die der Erfindung zugrunde liegende Aufgabe besteht somit darin, die Drehlagenerfassung bei elektrischen Hohlwellenmotoren zu vereinfachen und/oder zu verbessern, insbesondere derart, dass während der Herstellung des Hohlwellenmotors bereits eine Kalibrierung des Winkeloffsets möglich ist und somit der Zeit- und Kostenaufwand für die Endmontage des Hohlwellenmotors für einen Hydraulikkolben reduziert wird.

Die der Erfindung zugrunde liegende Aufgabe wird durch einen elektromotorisch betriebenen Hydraulikkolben mit einem elektrischen Hohlwellenmotor gelöst, wobei der Hohlwellenmotor eine rotierend antreibbare Hohlwelle und eine Erfassungseinrichtung umfasst, welche dazu eingerichtet ist, die Drehlage der Hohlwellezu erfassen, wobei die Erfassungseinrichtun einen an der Hohlwelle angeordneten Magneten und einen innerhalb der Hohlwelle angeordneten feststehenden Magnetfeldsensor umfasst, wobei der Magnetfeldsensor dazu eingerichtet ist, ein von dem Magneten erzeugtes Magnetfeld zu erfassen, und mit einer innerhalb der Hohlwelle des Hohlwellenmotors angeordneten Spindel, und einer mit der Hohlwelle des Hohlwellenmotors verbundenen Spindelmutter, welche dazu eingerichtet ist, die Spindel entlang ihrer Längsachse linear zu verschieben. Vorzugsweise sind der Magnetfeldsensor und der Magnet innerhalb einer orthogonal zu der Längsachse der Spindel verlaufenden Ebene angeordnet. Ferner ist der Magnetfeldsensor vorzugsweise auf einer Verlängerung der Längsachse der Spindel angeordnet. Über die Erfassung des Magnetfeldes kann die Drehlage der Hohlwelle bestimmt werden, welche eine präzise Kommutierung des Hohlwellenmotors erlaubt. Durch die präzise Kommutierung des Hohlwellenmotors kann die Linearbewegung der Spindel gesteuert werden, wodurch ein präzises Einstellen eines Hydraulikdrucks ermöglicht ist.

Erfindungsgemäß weist der Hydraulikkolben eine Verdrehsicherung auf. Die Verdrehsicherung ist dazu eingerichtet, eine Verdrehung der Spindel um ihre Längsachse zu verhindern, wobei der Magnetfeldsensor an der Verdrehsicherung angeordnet ist. Vorzugsweise umfasst die Verdrehsicherung das amagnetische feststehende Befestigungsteil. Vorzugsweise ist die Verdrehsicherung aus einem amagnetischen Material ausgebildet, wie beispielsweise Kunststoff, einem nicht-ferromagnetischen Metall oder einer nicht-ferromagnetischen Metalllegierung. Vorzugsweise erstreckt sich die Verdrehsicherung durch einen Ringabschnitt zwischen dem Magnetfeldsensor und dem Magneten, sodass das Magnetfeld durch die Verdrehsicherung hindurchtritt.

Nach einer bevorzugten Ausführungsform ist die Verdrehsicherung zweiteilig ausgebildet, wobei ein erster feststehender Teil sich aschnittsweise entlang der Spindel und durch einen Ringspalt zwischen dem Magneten und dem Magnetfeldsensor erstreckt. Besonders bevorzugt ist ein zweiter Teil der Verdrehsicherung an der Spindel angeordnet und gemeinsam mit der Spindel (104) linear beweglich.

Insbesondere kann der Magnetfeldsensor in einen Teil der Verdrehsicherung integriert sein. Insbesondere ist zwischen der dem Magnetfeldsensor zugewandten Stirnseite der Spindel und dem Magnetfeldsensor ein Abschnitt der Verdrehsicherung angeordnet. Vorzugsweise ist der Magnetfeldsensor an einem Abschnitt der Verdrehsicherung angeordnet, welcher im Wesentlichen parallel zu der dem Magnetfeldsensor zugewandten Stirnseite der Spindel verläuft. Die Verdrehsicherung verhindert, dass eine Drehbewegung der mit der Hohlwelle verbundenen Spindelmutter eine Drehbewegung der Spindel verursacht. Aufgrund der Verdrehsicherung wird eine Drehbewegung der Spindelmutter in eine Linearbewegung der Spindel umgesetzt. Die Verdrehsicherung ist vorzugsweise als formschlüssige Verdrehsicherung ausgebildet.

Vorzugsweise sind die Hohlwelle und die Spindelmutter torsionssteif, aber axial zueinander beweglich miteinander verbunden. Durch die axiale Beweglichkeit der Hohlwelle und der Spindelmutter können zwei Festlager eingesetzt werden, um die Rotoreinheit, welche die Hohlwelle und die Spindelmutter umfasst, gegenüber dem Motorengehäuse abzustützen. Vorzugsweise ist ein erstes Festlager an der Spindelmutter und ein zweites Festlager an der Hohlwelle angeordnet. Die Kupplungsstelle zwischen der Hohlwelle und der Spindelmutter ist vorzugsweise dazu eingerichtet, reversibel und zerstörungsfrei gelöst zu werden. Somit kann die Spindel von dem Hohlwellenmotor gelöst werden, beispielsweise um während der Produktion Testroutinen durchführen zu können und/oder Rework-Arbeiten ausführen zu können.

Vorzugsweise sind zwischen der Spindelmutter und der Spindel mehrere Kugeln angeordnet, sodass die Spindelmutter, die Spindel und die Kugeln einen Kugelgewindetrieb ausbilden. Dies führt zu einer verringerten Reibung und zu einem verminderten Verschleiß der Verbindung zwischen der Spindelmutter und der Spindel, sodass die Lebensdauer des Hydraulikkolbens erhöht und das Ausfallrisiko reduziert wird.

Außerdem kann der Hohlwellenmotor auch als Spaltrohrmotor eingesetzt werden, beispielsweise zum Antrieb einer Pumpe.

Die Erfindung macht sich die Erkenntnis zunutze, dass der von der Hohlwelle umschlossene Raum für einen Magnetfeldsensor genutzt werden kann, wenn der das auszuwertende Magnetfeld erzeugende Magnet an einer geeigneten Position an der Hohlwelle angeordnet wird. Durch die Rotation der Hohlwelle wird das von dem Magneten erzeugte Magnetfeld ebenfalls in Rotation versetzt, sodass zur Erfassung der Drehlage der Hohlwelle das sich mit der Hohlwelle gemeinsam drehende Magnetfeld des Magneten ausgewertet werden kann. Über die Erfassung der Drehlage der Hohlwelle kann eine präzise Kommutierung des Hohlwellenmotors erfolgen. Die Montage der Erfassungseinrichtung, d.h. die Befestigung des Magneten an der Hohlwelle und die Anordnung des Magnetfeldsensors, kann bereits während der Herstellung bzw. Produktion des Hohlwellenmotors erfolgen, sodass die notwendige Kalibrierung des Winkeloffsets bereits vor der Endmontage des elektrischen Hohlwellenmotors durchgeführt werden kann. Der für die Kalibrierung notwendige Zeit- und Kostenaufwand wird somit erheblich reduziert.

In einer bevorzugten Ausführungsform weist der Hohlwellenmotor eine Auswerteeinrichtung auf, welche signalleitend mit dem Magnetfeldsensor verbunden ist. Vorzugsweise ist die Auswerteeinrichtung dazu eingerichtet, die Signale des Magnetfeldsensors zur Erfassung der Drehlage der Hohlwelle auszuwerten. Vorzugsweise sind die rotierend antreibbare Hohlwelle, der an der Hohlwelle angeordnete Magnet und der Magnetfeldsensor innerhalb eines Motorengehäuses angeordnet. Die Auswerteeinrichtung kann innerhalb oder außerhalb des Motorengehäuses angeordnet sein.

In einer weiteren Ausführungsform umfasst der Hohlwellenmotor ein amagnetisches feststehendes Befestigungsteil, an welchem der Magnetfeldsensor angeordnet ist. Beispielsweise ist das Befestigungsteil zumindest teilweise innerhalb der Hohlwelle angeordnet und/oder an dem Motorengehäuse befestigt. Das Befestigungsteil kann insbesondere mittels Befestigungselementen, wie etwa Schrauben, an dem Motorengehäuse befestigt sein. Das Befestigungsteil kann beispielsweise aus Kunststoff ausgebildet sein. Alternativ kann das Befestigungsteil auch aus einem nicht-ferromagnetischen Metall oder einer nicht-ferromagnetischen Metalllegierung ausgebildet sein. Beispielsweise ist das Befestigungsteil aus Edelstahl ausgebildet. Insbesondere ist das Befestigungsteil nicht aus Nickel und/oder Cobalt ausgebildet. Vorzugsweise bildet das Befestigungsteil einen Abschnitt der Außenseite des Hohlwellenmotors aus. Vorzugsweise ist ein Abschnitt, insbesondere ein umlaufender Abschnitt des Befestigungsteils in einem Ringspalt zwischen dem Magneten und dem Magnetfeldsensor angeordnet.

Außerdem ist ein Hohlwellenmotor bevorzugt, bei welchem der Magnet ein Ringmagnet ist, welcher vorzugsweise an der Innenseite der Hohlwelle angeordnet ist. Vorzugsweise ist der als Ringmagnet ausgebildete Magnet formschlüssig, kraftschlüssig und/oder stoffschlüssig mit der Hohlwelle verbunden. Insbesondere ist der als Ringmagnet ausgebildete Magnet in einem stirnseitigen Endbereich der Hohlwelle an der Hohlwelle angeordnet. Vorzugsweise entspricht der Außendurchmesser des als Ringmagnet ausgebildeten Magneten im Wesentlichen dem Innendurchmesser der Hohlwelle.

In einer anderen bevorzugten Ausführungsform des Hohlwellenmotors umgibt der Magnet einen Sensierungsbereich, wobei der Magnetfeldsensor innerhalb des Sensierungsbereichs angeordnet ist. Vorzugsweise erstreckt sich ein Abschnitt des amagnetischen feststehenden Befestigungsteils durch den Sensierungsbereich. Innerhalb des von dem Magneten umgebenden Sensierungsbereichs weist das von dem Magneten erzeugte Magnetfeld eine besonders große Feldstärke auf, sodass die Erfassung des Magnetfelds durch den Magnetfeldsensor vereinfacht ist und/oder mit einer höheren Präzision erfolgen kann.

In einer weiteren bevorzugten Ausführungsform des Hohlwellenmotors weist der Magnet eine diametrale Magnetisierung auf. Ein diametral magnetisierter Magnet weist einen Nordpol und einen zu dem Nordpol gegenüberliegend angeordneten Südpol auf. Wenn der Magnet als Ringmagnet ausgebildet ist, ist die eine Ringhälfte als Nordpol und die andere Ringhälfte als Südpol ausgebildet. Durch die Verwendung von Magneten mit einer diametralen Magnetisierung wird das Risiko eines Magnetisierungsfehlers im Vergleich zu Multipolmagneten erheblich reduziert. In einigen Anwendungsfällen kann es jedoch auch vorteilhaft sein, einen Magnet, insbesondere einen Ringmagnet, mit einer Multipolmagnetisierung zu verwenden.

Bevorzugt ist außerdem ein Hohlwellenmotor, bei welchem eine Messoberfläche des Magnetfeldsensors im Wesentlichen koplanar zu dem von dem Magneten erzeugten Magnetfeld ausgerichtet ist. Wenn der Magnet als Ringmagnet ausgebildet ist, ist es bevorzugt, dass der Magnetfeldsensor im Zentrum des Ringes angeordnet ist.

Vorzugsweise ist der Magnetfeldsensor derart angeordnet, dass die Mittelachse des als Ringmagneten ausgebildeten Magneten den Magnetfeldsensor schneidet. Der Magnetfeldsensor kann beispielsweise ein Hall-Effekt-Sensor, ein AMR-(anisotroper magnetoresistiver)Effekt-Sensor, ein GMR-(giant magneto-resistive)-Sensor oder ein TMR-(tunnel magneto resistance)-Sensor sein.

Außerdem ist ein Hohlwellenmotor bevorzugt, bei welchem ein Teil der Hohlwelle oder ein mit der Hohlwelle verbundenes Ringelement als äußerer magnetischer Rückschluss für den Magneten ausgebildet ist. Vorzugsweise ist der Teil der Hohlwelle oder das mit der Hohlwelle verbundene Ringelement aus ferromagnetischem Material ausgebildet. Durch den Rückschluss wird die Stärke des von dem Magnetfeldsensor zu erfassenden Magnetfeldes im Bereich des Magnetfeldsensors weiter erhöht, sodass die Erfassung der Drehlage vereinfacht ist.

Die der Erfindung zugrunde liegende Aufgabe wird zudem durch ein Bremssystem der eingangs genannten Art gelöst, wobei der Hydraulikkolben des Bremssystems nach einer der vorstehend beschriebenen Ausführungsformen ausgebildet ist. Hinsichtlich der Vorteile und Modifikationen des erfindungsgemäßen Bremssystems wird auf die Vorteile und Modifikationen des Hohlwellenmotors sowie auf die Vorteile und Modifikationen des erfindungsgemäßen Hydraulikkolbens verwiesen.

Insbesondere ist der Hydraulikkolben dazu eingerichtet, einer oder mehreren hydraulischen Radbremseinheiten einen geeigneten Hydraulikdruck zur Ausführung eines Bremsvorgangs zur Verfügung zu stellen. Ferner ist es bevorzugt, dass der Hohlwellenmotor mit einer Auswerteeinrichtung eines Bremszylinders verbunden ist, wobei der Bremszylinder mit einem Bremspedal gekoppelt ist und die Auswerteeinrichtung auf Grundlage des Zustands des Bremszylinders Informationen zu dem Bremswunsch eines Fahrers ableitet. Diese Informationen werden dann zur Steuerung des Hohlwellenmotors und somit auch zur Betätigung der einen oder der mehreren Radbremseinheiten verwendet.

Nachfolgend wird eine bevorzugte Ausführungsform der Erfindung unter Bezugnahme auf die beiliegende Zeichnung näher erläutert und beschrieben. Dabei zeigt:

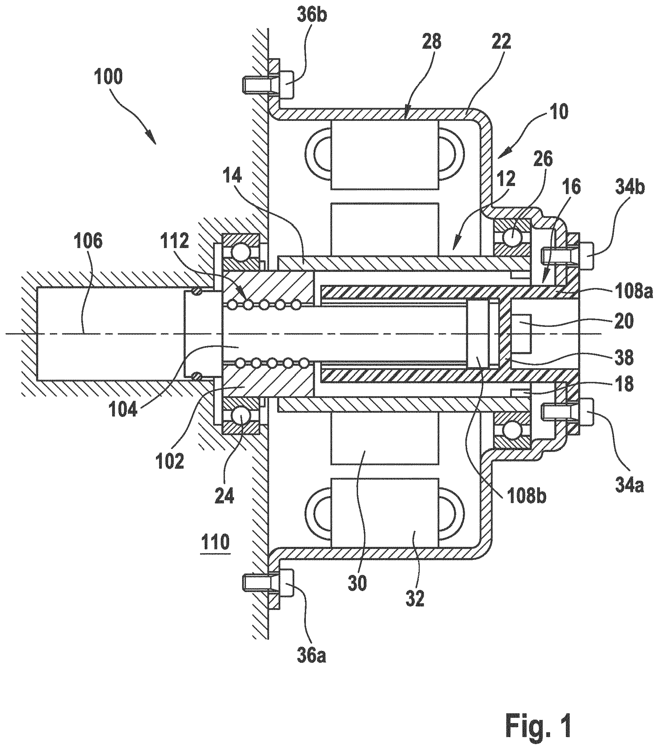

- Fig. 1: ein Ausführungsbeispiel des erfindungsgemäßen elektromotorisch betriebenen Hydraulikkolbens in einer schematischen Darstellung.

Die Fig. 1 zeigt einen elektromotorisch betriebenen Hydraulikkolben 100 mit einem Hohlwellenmotor 10, einer Spindelmutter 102, einer Spindel 104 und einer Verdrehsicherung 108a, 108b.

Der elektrische Hohlwellenmotor 10 umfasst eine rotierend antreibbare und aus einem ferromagnetischen Material ausgebildete Hohlwelle 14 und eine Erfassungseinrichtung 16, welche dazu eingerichtet ist, die Drehlage der Hohlwelle 14 zu erfassen. Die Erfassungseinrichtung 16 weist einen an der Hohlwelle 14 angeordneten Magneten 18 und einen innerhalb der Hohlwelle 14 angeordneten feststehenden Magnetfeldsensor 20 auf.

Der Magnet 18 ist ein Ringmagnet und weist eine diametrale Magnetisierung auf. Außerdem ist der Magnet 18 an einer Innenseite der Hohlwelle 14 angeordnet und umgibt einen Sensierungsbereich, wobei der Magnetfeldsensor 20 innerhalb des Sensierungsbereichs angeordnet ist. Ein Teil der Hohlwelle 14 ist als äußerer magnetischer Rückschluss für den Magneten 18 ausgebildet.

Der Magnetfeldsensor 20 und der Magnet 18 sind innerhalb einer orthogonal zu der Längsachse 106 der Spindel 104 verlaufenden Ebene angeordnet, wobei der Magnetfeldsensor 20 ferner auf einer Verlängerung der Längsachse 106 der Spindel 104 angeordnet ist. Eine Messoberfläche des Magnetfeldsensors 20 ist im Wesentlichen koplanar zu dem von dem Magneten 18 erzeugten Magnetfeld ausgerichtet, wobei der Magnetfeldsensor 20 dazu eingerichtet ist, ein von dem Magneten 18 erzeugtes Magnetfeld zu erfassen.

Außerdem weist die Erfassungseinrichtung 16 eine Auswerteeinrichtung auf, welche dazu eingerichtet ist, die Signale des Magnetfeldsensors 20 zur Bestimmung der Drehlage der Hohlwelle 14 auszuwerten.

Die Spindel 104 ist innerhalb der Hohlwelle 14 des Hohlwellenmotors 10 angeordnet. Die Spindelmutter 102 ist torsionssteif und axial beweglich mit der Hohlwelle 14 verbunden. Aufgrund der axialen Beweglichkeit können die Spindelmutter 102 und die Hohlwelle 14 jeweils mittels Festlagern 24, 26 abgestützt werden. Zwischen der Spindelmutter 102 und der Spindel 104 sind mehrere Kugeln 112 angeordnet, sodass die Spindelmutter 102, die Spindel 104 und die Kugeln 112 einen Kugelgewindetrieb ausbilden.

Die Spindelmutter 102 und die Hohlwelle 14 bilden zusammen eine Rotoreinheit 12 aus. Die Verbindung zwischen der Spindelmutter 102 und der Hohlwelle ist reversibel und zerstörungsfrei lösbar. Durch eine Rotation der Spindelmutter 102 wird die Spindel 104 entlang ihrer Längsachse 106 linear verschoben.

An Hohlwelle 14 ist eine Spule 30 angeordnet, welche mit der Spule 32 des Stators 28 des Hohlwellenmotors 10 zusammenwirkt, um die Hohlwelle 14 rotierend anzutreiben.

Die Verdrehsicherung 108a, 108b ist dazu eingerichtet, eine Verdrehung der Spindel 104 um ihre Längsachse 106 zu verhindern. Der Magnetfeldsensor 20 ist an einem aus Kunststoff ausgebildeten, amagnetischen feststehenden Befestigungsteil 38 angeordnet, wobei das Befestigungsteil 38 innerhalb der Hohlwelle 14 angeordnet und ein Bestandteil der Verdrehsicherung 108a, 108b ist.

Die Verdrehsicherung 108a, 108b ist zweiteilig ausgebildet, wobei ein erster feststehender Teil 108a sich abschnittsweise entlang der Spindel 104 und durch einen Ringspalt zwischen dem Magneten 18 und dem Magnetfeldsensor 20 erstreckt. Ein zweiter Teil 108b ist an der Spindel 104 angeordnet und gemeinsam mit der Spindel 104 linear beweglich.

Der Teil der Verdrehsicherung 108a, an welchem der Magnetfeldsensor 20 befestigt ist, ist mittels Befestigungselementen 34a, 34b mit dem Motorengehäuse 22 verbunden. Die Befestigungselemente 34a, 34b sind als Schrauben ausgebildet. An dem Motorengehäuse 22 ist ferner eine Hydraulikeinheit 110 angeordnet. Die Hydraulikeinheit 110 ist mittels als Schrauben ausgebildeten Befestigungselementen 36a, 36b an dem Motorengehäuse 22 befestigt und dazu eingerichtet, einer oder mehreren Radbremseinheiten zur Ausführung eines Bremsvorgangs einen geeigneten Hydraulikdruck bereitzustellen.

### Bezugszeichenliste

- 10: Hohlwellenmotor
- 12: Rotoreinheit
- 14: Hohlwelle
- 16: Erfassungseinrichtung
- 18: Magnet
- 20: Magnetfeldsensor
- 22: Motorengehäuse
- 24: Lager
- 26: Lager
- 28: Stator
- 30: Spule
- 32: Spule
- 34a, 34b: Befestigungselemente
- 36a, 36b: Befestigungselemente
- 38: Befestigungsteil

- 100: Hydraulikkolben
- 102: Spindelmutter
- 104: Spindel
- 106: Längsachse
- 108a, 108b: Verdrehsicherung
- 110: Hydraulikeinheit
- 112: Kugeln

## Patentansprüche

1. Elektromotorisch betriebener Hydraulikkolben (100), mit
- einem elektrischen Hohlwellenmotor (10), mit
- einer rotierend antreibbaren Hohlwelle (14); und
- einer Erfassungseinrichtung (16), welche dazu eingerichtet ist, die Drehlage der Hohlwelle (14) zu erfassen, wobei die Erfassungseinrichtung (16) einen an der Hohlwelle (14) angeordneten Magneten (18) und einen innerhalb der Hohlwelle (14) angeordneten feststehenden Magnetfeldsensor (20) umfasst, wobei der Magnetfeldsensor (20) dazu eingerichtet ist, ein von dem Magneten (18) erzeugtes Magnetfeld zu erfassen,
- einer innerhalb der Hohlwelle (14) des Hohlwellenmotors (10) angeordneten Spindel (104), und
- einer mit der Hohlwelle (14) des Hohlwellenmotors (10) verbundenen Spindelmutter (102), welche dazu eingerichtet ist, die Spindel (104) entlang ihrer Längsachse (106) linear zu verschieben,
- einer Verdrehsicherung (108a, 108b), welche dazu eingerichtet ist, eine Verdrehung der Spindel (104) um ihre Längsachse (106) zu verhindern, wobei der Magnetfeldsensor (20) an der Verdrehsicherung (108a, 108b) angeordnet ist.

2. Hydraulikkolben (100) nach Anspruch 1, **dadurch gekennzeichnet, dass** die Verdrehsicherung (108a, 108b) zweiteilig ausgebildet ist, wobei ein erster feststehender Teil (108a) sich abschnittsweise entlang der Spindel (104) und durch einen Ringspalt zwischen dem Magneten (18) und dem Magnetfeldsensor (20) erstreckt.

3. Hydraulikkolben (100) nach Anspruch 2, **dadurch gekennzeichnet, dass** ein zweiter Teil der Verdrehsicherung (108b) an der Spindel (104) angeordnet ist und gemeinsam mit der Spindel (104) linear beweglich ist.

4. Hydraulikkolben (100) nach einem der vorstehenden Ansprüche, **gekennzeichnet durch** ein amagnetisches feststehendes Befestigungsteil (38), an welchem der Magnetfeldsensor (20) angeordnet ist, wobei das Befestigungsteil (38) innerhalb der Hohlwelle (14) angeordnet und ein Bestandteil der Verdrehsicherung (108a, 108b) ist.

5. Hydraulikkolben (100) nach einem der vorstehenden Ansprüche, **dadurch gekennzeichnet, dass** der Magnet (18) ein Ringmagnet ist, welcher vorzugsweise an einer Innenseite der Hohlwelle (14) angeordnet ist.

6. Hydraulikkolben (100) nach einem der vorstehenden Ansprüche, **dadurch gekennzeichnet, dass** der Magnet (18) einen Sensierungsbereich umgibt, wobei der Magnetfeldsensor (20) innerhalb des Sensierungsbereichs angeordnet ist.

7. Hydraulikkolben (100) nach einem der vorstehenden Ansprüche, **dadurch gekennzeichnet, dass** der Magnet (18) eine diametrale Magnetisierung aufweist.

8. Hydraulikkolben (100) nach einem der vorstehenden Ansprüche, **dadurch gekennzeichnet, dass** eine Messoberfläche des Magnetfeldsensors (20) im Wesentlichen koplanar zu dem von dem Magneten (18) erzeugten Magnetfeld ausgerichtet ist.

9. Hydraulikkolben (100) nach einem der vorstehenden Ansprüche, **dadurch gekennzeichnet, dass** ein Teil der Hohlwelle (14) oder ein mit der Hohlwelle (14) verbundenes Ringelement als äußerer magnetischer Rückschluss für den Magneten (18) ausgebildet ist.

10. Bremssystem für ein Fahrzeug, mit
- einem elektromotorisch betriebenen Hydraulikkolben (100) ;
**dadurch gekennzeichnet, dass** der Hydraulikkolben (100) nach einem der vorstehenden Ansprüche ausgebildet ist.

## Claims

1. Electromotively operated hydraulic piston (100) having
- an electric hollow-shaft motor (10) which has
- a hollow shaft (14) which is able to be driven in rotation; and has
- a detection device (16) which is configured to detect the rotational position of the hollow shaft (14), wherein the detection device (16) comprises a magnet (18), which is arranged on the hollow shaft (14), and a fixed magnetic field sensor (20), which is arranged within the hollow shaft (14), wherein the magnetic field sensor (20) is configured to detect a magnetic field generated by the magnet (18),
- a spindle (104) which is arranged within the hollow shaft (14) of the hollow-shaft motor (10), and
- a spindle nut (102) which is connected to the hollow shaft (14) of the hollow-shaft motor (10) and which is configured to linearly displace the spindle (104) along its longitudinal axis (106),
- a rotation prevention means (108a, 108b) which is configured to prevent rotation of the spindle (104) about its longitudinal axis (106), wherein the magnetic field sensor (20) is arranged on the rotation prevention means (108a, 108b).

2. Hydraulic piston (100) according to Claim 1, **characterized in that** the rotation prevention means (108a, 108b) is of two-part form, wherein a first, fixed part (108a) extends sectionally along the spindle (104) and through an annular gap between the magnet (18) and the magnetic field sensor (20).

3. Hydraulic piston (100) according to Claim 2, **characterized in that** a second part (108b) of the rotation prevention means is arranged on the spindle (104), and is linearly movable together with the spindle (104).

4. Hydraulic piston (100) according to one of the preceding claims, **characterized by** an amagnetic, fixed fastening part (38) on which the magnetic field sensor (20) is arranged, wherein the fastening part (38) is arranged within the hollow shaft (14) and is a constituent part of the rotation prevention means (108a, 108b).

5. Hydraulic piston (100) according to one of the preceding claims, **characterized in that** the magnet (18) is an annular magnet, which is preferably arranged on an inner side of the hollow shaft (14).

6. Hydraulic piston (100) according to one of the preceding claims, **characterized in that** the magnet (18) surrounds a sensing region, wherein the magnetic field sensor (20) is arranged within the sensing region.

7. Hydraulic piston (100) according to one of the preceding claims, **characterized in that** the magnet (18) has diametrical magnetization.

8. Hydraulic piston (100) according to one of the preceding claims, **characterized in that** a measurement surface of the magnetic field sensor (20) is oriented so as to be substantially coplanar with the magnetic field generated by the magnet (18) .

9. Hydraulic piston (100) according to one of the preceding claims, **characterized in that** one part of the hollow shaft (14), or an annular element connected to the hollow shaft (14), is formed as an outer magnetic return path for the magnet (18).

10. Brake system for a vehicle, having
- an electromotively operated hydraulic piston (100);
**characterized in that** the hydraulic piston (100) is designed according to one of the preceding claims.

## Revendications

1. Piston hydraulique actionné par moteur électrique (100), comprenant
- un moteur électrique à arbre creux (10), comprenant
- un arbre creux (14) pouvant être entraîné en rotation ; et
- un dispositif de détection (16) qui est aménagé pour détecter la position de rotation de l'arbre creux (14), le dispositif de détection (16) comprenant un aimant (18) disposé sur l'arbre creux (14) et un capteur de champ magnétique fixe (20) disposé à l'intérieur de l'arbre creux (14), le capteur de champ magnétique (20) étant aménagé pour détecter un champ magnétique généré par l'aimant (18),
- une broche (104) disposée à l'intérieur de l'arbre creux (14) du moteur à arbre creux (10), et
- un écrou de broche (102) relié à l'arbre creux (14) du moteur à arbre creux (10) et qui est aménagé pour déplacer linéairement la broche (104) le long de son axe longitudinal (106),
- un dispositif anti-rotation (108a, 108b) qui est aménagé pour empêcher une rotation de la broche (104) autour de son axe longitudinal (106), le capteur de champ magnétique (20) étant disposé sur le dispositif anti-rotation (108a, 108b).

2. Piston hydraulique (100) selon la revendication 1, **caractérisé en ce que** le dispositif anti-rotation (108a, 108b) est réalisé en deux parties, une première partie fixe (108a) s'étendant par endroits le long de la broche (104) et à travers une fente annulaire entre l'aimant (18) et le capteur de champ magnétique (20).

3. Piston hydraulique (100) selon la revendication 2, **caractérisé en ce qu'**une deuxième partie du dispositif anti-rotation (108b) est disposée sur la broche (104) et peut être déplacée linéairement conjointement avec la broche (104).

4. Piston hydraulique (100) selon l'une quelconque des revendications précédentes, **caractérisé par** une pièce de fixation fixe amagnétique (38) sur laquelle le capteur de champ magnétique (20) est disposé, la pièce de fixation (38) étant disposée à l'intérieur de l'arbre creux (14) et faisant partie du dispositif anti-rotation (108a, 108b).

5. Piston hydraulique (100) selon l'une quelconque des revendications précédentes, **caractérisé en ce que** l'aimant (18) est un aimant annulaire qui est disposé de préférence sur une face intérieure de l'arbre creux (14) .

6. Piston hydraulique (100) selon l'une quelconque des revendications précédentes, **caractérisé en ce que** l'aimant (18) entoure une zone de détection, le capteur de champ magnétique (20) étant disposé à l'intérieur de la zone de détection.

7. Piston hydraulique (100) selon l'une quelconque des revendications précédentes, **caractérisé en ce que** l'aimant (18) présente une magnétisation diamétrale.

8. Piston hydraulique (100) selon l'une quelconque des revendications précédentes, **caractérisé en ce qu'**une surface de mesure du capteur de champ magnétique (20) est alignée de manière substantiellement coplanaire au champ magnétique généré par l'aimant (18) .

9. Piston hydraulique (100) selon l'une quelconque des revendications précédentes, **caractérisé en ce qu'**une partie de l'arbre creux (14) ou un élément annulaire relié à l'arbre creux (14) est réalisé(e) sous forme de retour magnétique extérieur pour l'aimant (18) .

10. Système de freinage pour un véhicule, comprenant
- un piston hydraulique (100) actionné par moteur électrique ;
**caractérisé en ce que** le piston hydraulique (100) est réalisé selon l'une quelconque des revendications précédentes.
